# EUROPEAN PATENT APPLICATION

(11) **EP 2 289 692 A1**
(43) Date of publication of application: **02.03.2011**
(21) Application number: 09762364.9
(22) Date of filing: 25.05.2009
(51) Int. Cl.: B29D 30/30, B29D 30/16

(54) **PROCESS FOR PRODUCING UNVALCANIZED TIRE AND APPARATUS FOR PRODUCING THE TIRE**

(30) Priority: 10.06.2008 JP 2008151442; 10.06.2008 JP 2008151443
(71) Applicant: Bridgestone Corporation, Tokyo 104-8340 (JP)
(72) Inventor: OGAWA, Yuichiro, Kodaira-shi Tokyo 187-8531 (JP)
(74) Representative: Oxley, Robin John George
(86) International application number: PCT/JP2009/059553
(87) International publication number: WO 2009/150934

(57) **Abstract**

When a stitching roll is allowed to act on a tread rubber member to attach the tread rubber member to an unvulcanized tire, lateral displacement of the tread rubber member is prevented. In a method for manufacturing unvulcanized tires by attaching a tread rubber composite (40) to an unvulcanized tire (55), the tread rubber composite (40) is disposed on the outer circumference of the unvulcanized tire (55) that is disposed on the molding drum (50) and is swelled into a toroidal shape, and, while the molding drum (50) is rotated, a rotating stitching roll (45) is pressed against a tread rubber member (42) of the tread rubber composite (40) to press-bond it to the unvulcanized tire (55). At this time, the outer-peripheral rotation speed of the stitching roll (45) is controlled such that it is substantially equal to the outer-peripheral rotation speed of the above-described tread rubber member (42).

## Description

### Technical Field

The present invention relates to a method for manufacturing unvulcanized tires and an apparatus for manufacturing the tires in which an unvulcanized rubber member, which is a tire component, is press-bonded to an object to be molded.

### Background Art

Conventionally, when a tire is molded, an unvulcanized tire is molded by press-bonding an unvulcanized rubber member to an object to be molded. If air remains in the press-bonding surfaces in this press-bonding process, the residual air may degrade the quality of product tires. Therefore, a stitching roll is employed as means for performing press-bonding such that no air remains.
This stitching roll exerts a pressing force on an unvulcanized rubber member (for example, a carcass layer or a tread rubber member) to press-bond the unvulcanized rubber member to an object to be molded. If the pressing force is exerted at an angle to the surface of, for example, a tread rubber composite, a component of force in the circumferential direction is generated at the surface of the carcass layer or the tread rubber composite, displacing the tread rubber member in the lateral direction. Therefore, the stitching roll needs to be brought into contact with and pressed against the surface of the unvulcanized tire always at right angles, so as to conform to the surface shape thereof.

To overcome this problem, various pieces of prior art have been proposed. As an example of such prior art, in order to mold an unvulcanized tire, a method for removing air between a tread rubber member and a ply is known, in which the ply (carcass) is attached to a molding drum, beads are set, the ply is wound up, the tread rubber member is attached, a disc-like spinner (a stitching roll) is brought into contact with a tread face to make the tread rubber member firmly adhered to the ply completely, and the spinner is moved in the axial direction of the molding drum (Patent Literature 1).

Furthermore, in a tire building machine that press-bonds a plurality of tire components, a device for press-bonding the tire components is also known, in which the orientation of a stitching roll is controlled so that the stitching roll can be pressed against the surface of the tire component swelled in a toroidal shape always at right angles, thereby making it possible to perform molding, from band molding to second molding, with the same molding drum in radial tire molding (Patent Literature 2).

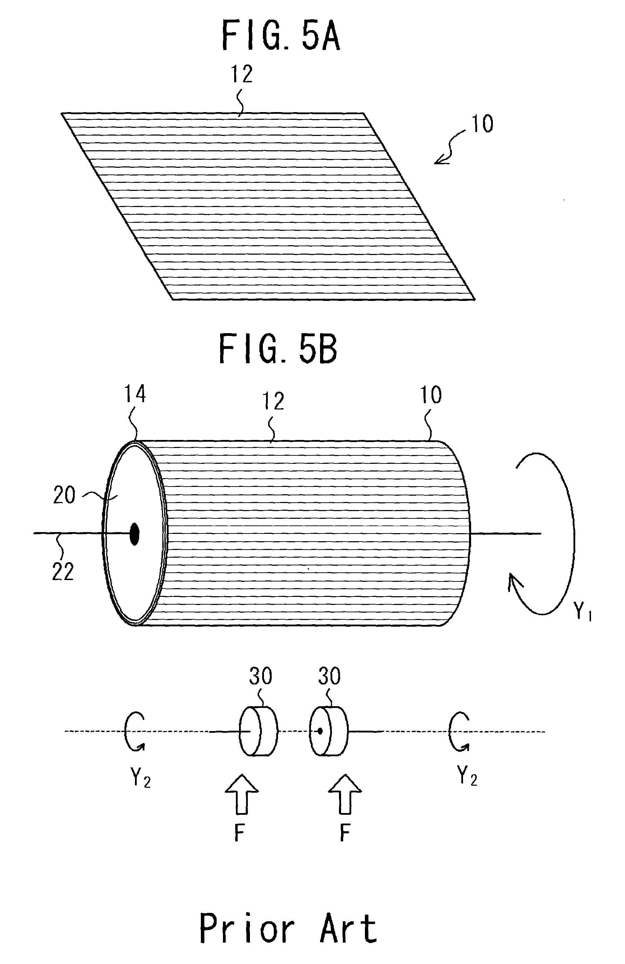

Furthermore, although it is not disclosed in patent literature, a configuration for describing press-bonding of a cord-embedded rubber member, which is an unvulcanized rubber member, performed in a conventional process of manufacturing radial tires is shown in FIG. 5. FIG. 5A is a perspective view of a carcass ply containing reinforcing cords, which is an example of a cord-embedded rubber member. In a carcass ply 10, a plurality of cords made of, for example, steel, or organic or inorganic fiber, are embedded parallel to one another in a rubber base.

FIG. 5B is a perspective view showing the carcass ply 10, which is an unvulcanized rubber member, wound on an object to be molded, such as an inner liner 14 wound on, for example, a molding drum 20, and two stitching rolls 30 that press the carcass ply 10. The left and right stitching rolls 30 are configured to be able to move in directions toward and away from a rotation axis 22 of a molding drum 20 and to move in opposite directions from each other along the axis of the molding drum 20 by a moving mechanism (not shown).

Next, another conventional example in which a tread rubber member, which is an unvulcanized rubber member, is attached to an object to be molded with stitching rolls will be described.
Although it is not disclosed in patent literature, FIG. 6 is a diagram showing a state in which, when, for example, a radial tire is molded, in a first molding step, an unvulcanized tire is molded in which a green case (an unvulcanized tire) is formed by winding a carcass layer, bead wires, bead fillers, and side rubber members around a cylindrical drum, and then, a tread rubber composite 40 formed of a tread rubber member and a belt is press-bonded to shoulder portions and side portions of an unvulcanized tire 55 after the first molding step.

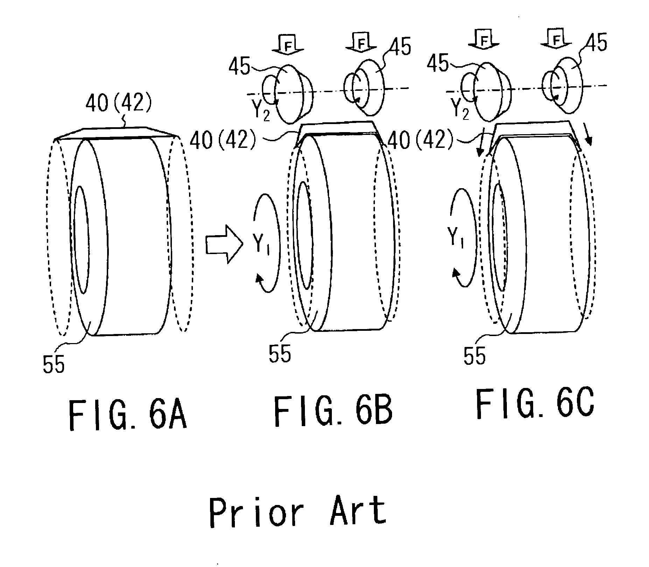

FIG. 6A is a perspective view schematically showing a state in which the tread rubber composite 40 (note that the belt is omitted, and only the tread rubber member 42 is shown) is disposed on the unvulcanized tire 55, FIG. 6B is a perspective view schematically showing the shape that the tread rubber composite 40 should have when it is attached to the unvulcanized tire 55, and FIG. 6C is a perspective view schematically showing the actual shape.

The unvulcanized tire 55 rotates in the direction indicated by an arrow Y₁ together with a molding drum (not shown), and stitching rolls 45 (in this case, the stitching rolls 45 have a circular truncated cone shape, whose inclined surfaces have an inclination equal to the inclination of the shoulder portions of the unvulcanized tire 55), being urged against the rotating tread rubber member 42, rotate in a driven manner in the direction opposite thereto, i.e., in the direction indicated by an arrow Y₂.
As the changes of the dashed lines show, the tread rubber member 42 of the unvulcanized tire 55 shown in FIG. 6C is slightly elongated compared with the original shape shown in FIG. 6B.

### Citation List

### Patent Literature

PTL 1: Japanese Unexamined Patent Application Publication No. 2003-266556
PTL 2: Japanese Unexamined Patent Application Publication No. 9-117969
PTL 3: Japanese Unexamined Patent Application Publication No. 60-132745
PTL 4: Japanese Unexamined Patent Application Publication No. 2003-71947

### Summary of Invention

### Technical Problem

With both the apparatus and method for press-bonding tire components disclosed in the above-described Patent Literatures 1 and 2, the stitching rolls (spinners) can be brought into contact with the outer circumferential surface of the rotating tire component at right angles.
However, because the above-described stitching rolls are configured to be brought into contact with the rotating tire component and to be freely rotated in a driven manner, when they are actually brought into contact with the outer circumferential surface of the tire component and are pressed against it, a delay due to rotational resistance or the like occurs relative to the outer-peripheral speed of the tire component.

Furthermore, if there is a difference in rotation speed between the tire component and the stitching rolls, a force supposed to act at right angles on the tire component from the stitching rolls, i.e., a force supposed to be directed, in a straight line, in the radial direction (center) of the tire component that is held in a cylindrical shape on the molding drum, is displaced in the circumferential direction in accordance with the difference in speed, producing a component of force in the circumferential direction. If this force is large, displacement in the circumferential direction (i.e., elongation) occurs in the tire component. Herein, there is a problem in that, if the tire component is a cord-embedded rubber member, the orientation of the reinforcing cords is slightly displaced from the target position due to the press-bonding by the stitching rolls.

Furthermore, in press-bonding of the above-described cord-embedded rubber member in the conventional process of manufacturing radial tires, the carcass ply 10 shown in FIG. 5A is wound around the inner liner 14 on the molding drum 20 and is then rotated together with the inner liner 14 in the direction indicated by the arrow Y₁, as shown in FIG. 5B. Then, a pair of stitching rolls 30 are urged against the rotating carcass ply 10 and are rotated in the direction opposite thereto, i.e., in the direction indicated by the arrow Y₂, in a driven manner.

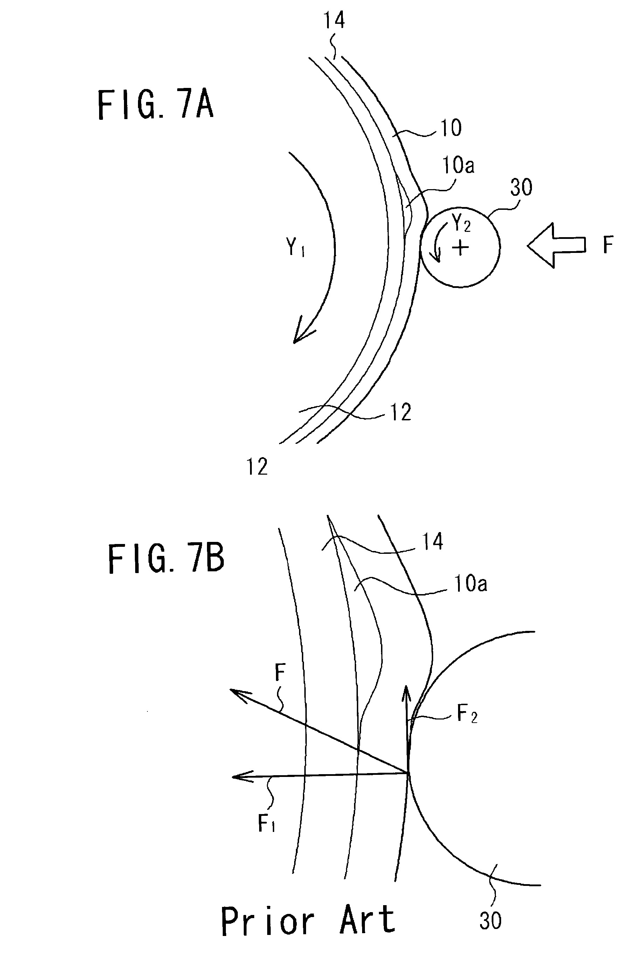

FIG. 7A is a side view of a relevant part showing the relationship between the unvulcanized rubber member (for example, the carcass ply) 10 and the stitching rolls 30 in this case, and FIG. 7B is an enlarged view of the contact portion between the carcass ply 10 and the stitching rolls 30.
As shown in FIG. 7A, a force F directed to the central axis of the molding drum 20 acts on the stitching rolls 30 being driven. Herein, if the relative speed of the outer-peripheral rotation speed of the carcass ply 10 to the outer-peripheral rotation speed of the stitching rolls 30 is zero, the force F totally acts normal to the center of the tubular carcass ply 10, i.e., the surface thereof. However, in actuality, the outer-peripheral rotation speed of the stitching rolls 30 is lower than the outer-peripheral rotation speed of the carcass ply 10. Thus, as shown in FIG. 7B, the direction of the force F is inclined from the perpendicular, in accordance with the difference in relative speed. As a result, a component F₁ perpendicular to the carcass ply 10 and a component F₂ parallel to the surface thereof are generated on the surface of the carcass ply 10.

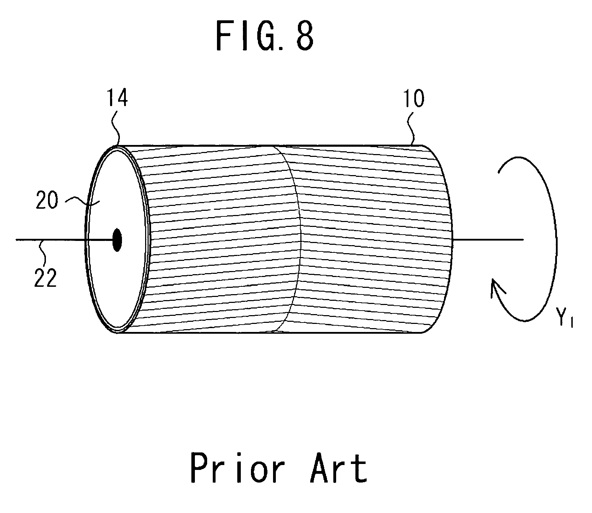

When the force component F₂ parallel to the surface of the carcass ply 10 (i.e., in the circumferential direction) has a predetermined magnitude, the reinforcing cords of the carcass ply 10, disposed substantially parallel to the axis of the molding drum 20, are displaced in the circumferential direction, as shown in FIG. 8 (the reinforcing cords are displaced from the axis of the above-described molding drum 20 by about 1 to 2°). Such displacement of the orientation of the reinforcing cords in the circumferential direction may cause deterioration in shape, such as crease, of the carcass ply 10 or separation of the tire components, or it may produce a gap 10a, shown in FIG. 7B, allowing air to enter. Thus, the quality of product tires may be degraded.
The force component F₂ parallel to the surface of the carcass ply 10 increases in proportion to the increase of the force F acting on the stitching rolls 30. However, if the force F acting is reduced to avoid that, the press-bonding force becomes insufficient, making proper press-bonding impossible.

The above-described relationship between the carcass ply and the stitching rolls is equal to the relationship between the tread rubber member and the stitching rolls when the tread rubber member is attached to the object to be molded.
If a force component parallel to the surface of the tread rubber member (equivalent to the above-described "F₂") exceeds a predetermined value, the unvulcanized tread rubber member is elongated in the circumferential direction. Thus, conventionally, the length of the tread rubber member needs to be set small in advance, taking the elongation into account.

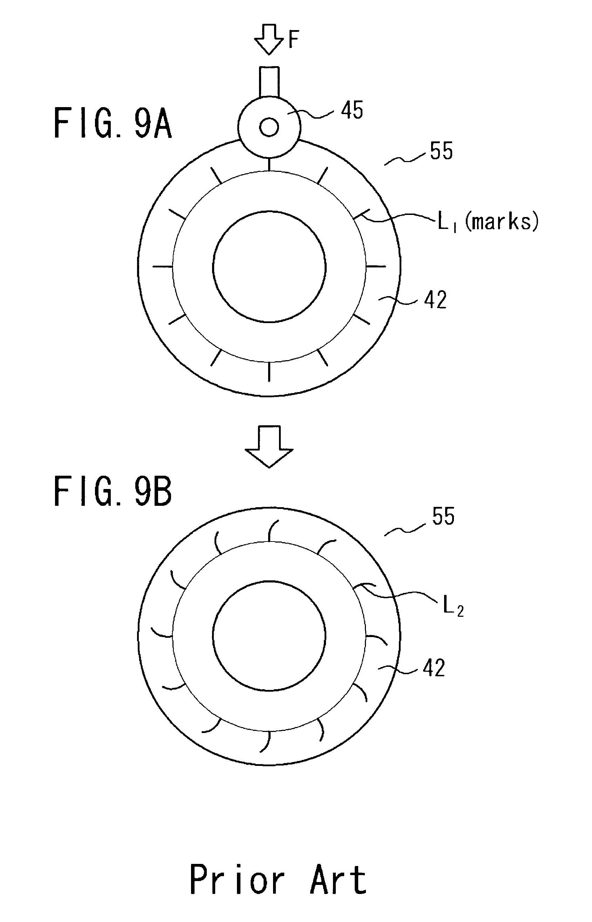

FIG. 9 is a front view of the unvulcanized tire provided with marks so that the conditions of elongation of the tread rubber member can be visually checked. FIG. 9A shows the unvulcanized tire 55 before the stitching rolls 45 are brought into contact therewith, and FIG. 9B shows the unvulcanized tire 55 after going through the stitching.
That is, as shown in FIG. 9A, straight lines L1 are provided radially on the surface of the unvulcanized tire 55 before the stitching rolls 45 are brought into contact therewith. Next, the stitching rolls 45 are pressed against the tread rubber member 42 to perform stitching. As a result, as shown in FIG. 9B, the straight lines L1 are transformed into curved lines L2 that are displaced in one direction. The transformation from the straight lines L1 to the curved lines L2 shows that the intended shape cannot be achieved.

Thus, even if the stitching rolls 45 are pressed against the tread rubber member 42 at right angles, the difference in rotation speed between them generates a force in the circumferential direction. If the pressing force is large, as shown in FIG. 9B, the tread rubber member 42 is displaced in the circumferential direction, resulting in deterioration in evenness in the circumferential direction of product tires and degradation in uniformity and balance.
Furthermore, if the tread rubber member 42 is attached to the unvulcanized tire 55 while it is displaced in the circumferential direction, deformed parts of the tread rubber member 42 after attachment have residual stress in the circumferential direction. When the unvulcanized tire is let stand, the deformed tread rubber member 42 tends to restore the original shape, partially deforming the inner tire components, such as the ply. This affects the tire performance, such as the tire uniformity.

As has been described, when the stitching rolls are used to attach the tire component, such as the tread rubber composite, the above-described problem occurs. Thus, various methods and apparatuses for attaching tire components have been developed, in which a bladder having a high internal pressure is used instead of the stitching rolls to press the tire component (see Patent Literatures 3 and 4) .
In the above-described methods and apparatuses in which a bladder is used as attaching means, the tread rubber member is not displaced during attaching. However, due to repeated strain of the bladder, wear of the surface, and the like, the bladder requires relatively frequent replacement. High frequency of replacing operation may decrease the manufacturability in tire manufacturing, leading to another problem.
Furthermore, in order to remove the air remaining between the attached members, the press-bonding needs to be performed from the center of the unvulcanized tire in the width direction. However, with the bladder, the tread is not necessarily press-bonded in that order.

The present invention has been made in view of the above-described conventional problems, and an object thereof is to solve the above-described problems caused by the difference in rotation speed between the pressing rolls and the rotating object to be molded, occurring when the conventional pressing rolls (stitching rolls) are used, while using the pressing rolls.

### Solution to Problem

(1) The present invention is a method for manufacturing unvulcanized tires by attaching an unvulcanized rubber member to an object to be molded. The method includes a step of disposing the unvulcanized rubber member on the object to be molded; a step of rotating the object to be molded; and a step of press-bonding the unvulcanized rubber member to the object to be molded while rotating a pressing roll in a direction opposite to a direction in which the unvulcanized rubber member is rotated such that the outer circumferential speed of the pressing roll is substantially equal to the outer circumferential speed of the unvulcanized rubber member.
(2) The present invention is the method for manufacturing unvulcanized tires according to the above-described (1), further including a step of moving the pressing roll in a direction of a rotation axis of the object to be molded.
(3) The present invention is the method for manufacturing unvulcanized tires according to the above-described (1) or (2), in which, in a step of pressing the unvulcanized rubber member, the pressing roll is pressed in the radial direction of the object to be molded.
(4) The present invention is the method for manufacturing unvulcanized tires according to the above-described (1), in which the object to be molded is a toroidal-shaped tire component.
(5) The present invention is the method for manufacturing unvulcanized tires according to the above-described (4), in which the press-bonding step includes a first press-bonding step in which the unvulcanized rubber member is press-bonded to a center portion of the tire component; a second press-bonding step in which the unvulcanized rubber member is press-bonded to middle portions of the tire component between the center portion and ends; and a third press-bonding step in which the unvulcanized rubber member is press-bonded to the ends of the tire component.
(6) The present invention is the method for manufacturing unvulcanized tires according to the above-described (5), in which the first press-bonding step, the second press-bonding step, and the third press-bonding step are performed in sequence in the press-bonding step, and, at this time, the first press-bonding step is continued while the second press-bonding step and the third press-bonding step are performed.
(7) The present invention is an apparatus for manufacturing unvulcanized tires by attaching an unvulcanized rubber member to an object to be molded. The apparatus includes a driving mechanism for rotating the object to be molded; a pressing roll for press-bonding the unvulcanized rubber member disposed on the object to be molded to the object to be molded; and a pressing-roll driving mechanism for rotating the pressing roll in a direction opposite to a direction in which the unvulcanized rubber member is rotated such that the outer circumferential speed of the pressing roll is substantially equal to the outer circumferential speed of the unvulcanized rubber member.
(8) The present invention is the apparatus for manufacturing unvulcanized tires according to the above-described (7), further including a moving mechanism for moving the pressing roll in a direction of a rotation axis of the object to be molded.
(9) The present invention is the apparatus for manufacturing unvulcanized tires according to the above-described (7) or (8), further including a pressing mechanism for pressing the pressing roll in the radial direction of the object to be molded.
(10) The present invention is the apparatus for manufacturing unvulcanized tires according to the above-described (7), in which the object to be molded is a toroidal-shaped tire component.
(11) The present invention is the apparatus for manufacturing unvulcanized tires according to the above-described (10), in which the pressing roll is a first pressing roll that press-bonds the unvulcanized rubber member to a center portion of the tire component.
(12) The present invention is the apparatus for manufacturing unvulcanized tires according to the above-described (10), in which the pressing roll is a second pressing roll that press-bonds the unvulcanized rubber member to middle portions of the tire component between the center portion and ends.
(13) The present invention is the apparatus for manufacturing unvulcanized tires according to the above-described (10), in which the pressing roll is a third pressing roll that press-bonds the unvulcanized rubber member to the ends of the tire component.
(14) The present invention is the apparatus for manufacturing unvulcanized tires according to the above-described (11), in which the first pressing roll has a cylindrical shape with a constant diameter.
(15) The present invention is the apparatus for manufacturing unvulcanized tires according to the above-described (14), in which the first pressing roll has a width that is substantially equal to the width of the center portion of the tire component.
(16) The present invention is the apparatus for manufacturing unvulcanized tires according to the above-described (12), in which the second pressing roll has a circular truncated cone shape with an inclination substantially equal to the inclination of shoulder portions of the tire component.

### Advantageous Effects of Invention

According to the present invention, because the pressing roll is driven such that the outer-peripheral rotation speed of the pressing roll is substantially equal to the outer-peripheral rotation speed of the unvulcanized rubber member during the press-bonding, elongation of the unvulcanized rubber member and displacement of the orientation of the reinforcing cords in the circumferential direction, occurring in the above-described conventional case, are prevented.
Therefore, there is no need to predict the elongation (deformation) of the unvulcanized rubber member and determine the size thereof in advance when the unvulcanized rubber member is attached to the tire component, as in the conventional case. Furthermore, because the force to be exerted on the pressing rolls can be increased without taking the elongation of the unvulcanized rubber member into consideration, the residual air can be assuredly removed. Accordingly, it is possible to obtain product tires having excellent quality such as uniformity.

### Brief Description of Drawings

[FIG. 1] FIG. 1 is a perspective view of an apparatus for manufacturing unvulcanized tires according to an embodiment of the present invention.
[FIG. 2] FIG. 2 is a cross-sectional view of a relevant part of a second embodiment, showing an unvulcanized tire, a tread rubber composite disposed on the outer circumferential surface thereof, and stitching rolls.
[FIG. 3] FIG. 3 is a diagram schematically showing the above-described stitching rolls.
[FIG. 4] FIG. 4 is a diagram describing the process of performing stitching using stitching rolls according to a third embodiment.
[FIG. 5] FIG. 5A is a perspective view of a wire-embedded ply, and FIG. 5B is a perspective view schematically showing a relevant part of a conventional apparatus for manufacturing unvulcanized tires, showing stitching rolls and a molding drum on which the wire-embedded ply is wound.
[FIG. 6] FIG. 6 is a diagram for describing each state in which a tread rubber composite is press-bonded to a conventional unvulcanized tire after a first molding step, in which FIG. 6A is a perspective view schematically showing a state in which the tread rubber composite is disposed on the unvulcanized tire, FIG. 6B is a perspective view schematically showing the shape that the tread rubber composite should have when it is attached to the above-described unvulcanized tire, and FIG. 6C is a perspective view schematically showing the actual shape.
[FIG. 7] FIG. 7 is a diagram for describing displacement of the tire component in the circumferential direction.
[FIG. 8] FIG. 8 is a perspective view schematically showing the state of wires of the wire-embedded ply after being press-bonded by conventional stitching rolls.
[FIG. 9] FIG. 9 is a front view of the conventional unvulcanized tire for showing elongation of the tread rubber member, in which FIG. 6A shows a state before the stitching rolls are brought into contact therewith, and FIG. 6B is a front view showing a state after the stitching rolls are brought into contact therewith.

### Description of Embodiments

### First Embodiment

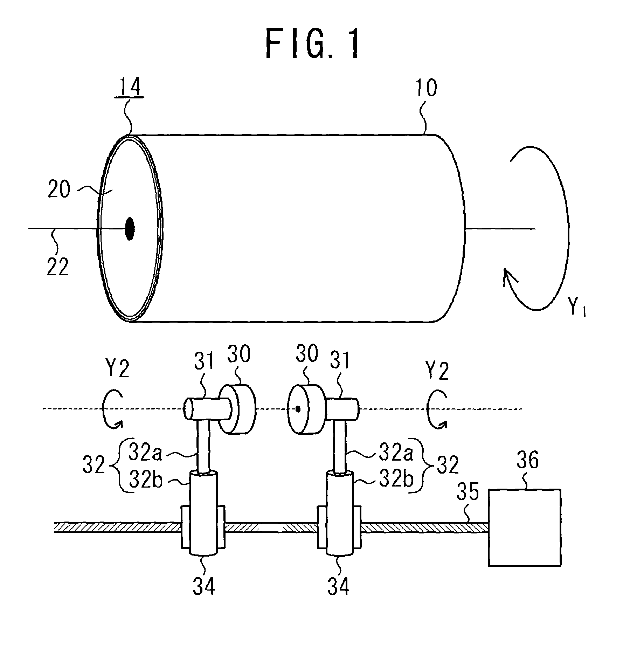

FIG. 1 is a diagram for describing the press-bonding state of a tire component of the present invention and is a perspective view showing a state in which a carcass ply 10, which is wound on, for example, an inner liner 14 wound on the molding drum 20, and two stitching rolls 30, which are an embodiment of a pressing roll, are disposed.
The configuration shown in FIG. 1 will be described taking as an example a case where the carcass ply 10 embedded with reinforcing cords, which is an example of an unvulcanized rubber member, is attached to the above-described inner liner 14 on the molding drum 20, i.e., an object to be molded.
The left and right stitching rolls 30 are configured to be able to move in directions toward and away from the rotation axis 22 of the molding drum 20 and to move in opposite directions from each other along the axis of the molding drum 20.

That is, the left and right stitching rolls 30 are mounted, for example, to ends of pistons 32a of piston mechanisms 32, and cylinders 32b are mounted to supporting bases 34 having nut members. The supporting bases 34 having nut members have, at the lower ends, nut members that are threaded to a screw rod 35 disposed in the direction of the rotation axis of the molding drum 20. An end of the screw rod 35 is connected to a screw-rod driving mechanism 36, such as a motor.
In the above-described configuration, by extending the pistons 32a with respect to the cylinders 32b, the stitching rolls 30 press the carcass ply 10 wound around the molding drum 20 rotated by a driving mechanism (not shown) in the radial direction of the cylindrical shape. In addition, by driving the above-described screw-rod driving mechanism 36 in that state, the left and right stitching rolls 30 are driven such that they are moved toward and away from each other along the rotation axis 22 of the molding drum 20, press-bonding the carcass ply 10, which is an unvulcanized rubber member, to the object to be molded including the inner liner 14, which is also a tire component.

Although the above configuration is the same as the conventional configuration, unlike the conventional rolls that are freely rotated in a driven manner, the stitching rolls 30 according to this embodiment each integrally have a rotary driving mechanism 31 formed of, for example, a motor and a speed-reduction mechanism. In the example shown, the rotary driving mechanisms 31 are mounted at the ends of the piston rods 32a of the piston mechanisms 32.
The motors of the rotary driving mechanisms 31 are controlled by a motor control unit (not shown), and the rotation of the motors is transmitted to the rotation axes of the stitching rolls 30 via a speed-reduction unit that reduces speed at a certain speed-reduction ratio. The motor control unit calculates the rotation speed of the motors needed to be equal to the rotation speed of the molding drum 20 from the speed-reduction ratio of the above-described speed-reduction unit and the diameter of the stitching rolls, and performs speed control in accordance with the type of the motors used. Thus, the outer-peripheral rotation speed of the stitching rolls 30 is controlled to be substantially equal to the outer-peripheral rotation speed of the carcass ply 10, which is an unvulcanized rubber member.

Herein, ideally, it is desirable that the outer-peripheral rotation speed of the stitching rolls 30 and the outer-peripheral rotation speed of the carcass ply 10, which is an unvulcanized rubber member, be completely the same. However, in actuality, because the ambient conditions, such as the rotational resistances, of their rotary driving mechanisms are different, it is difficult to make them completely the same. Therefore, herein, they are controlled at substantially the same speeds. Herein, the phrase "substantially the same speeds" does not require that they are exactly the same, but means that the speed of the above-described stitching rolls 30 is brought closer to the outer circumferential speed of the carcass ply 10. The following case falls under this: That is, the levels of deterioration in shape, such as crease, of the carcass ply 10, separation of the components, entrance of air, etc., when the stitching rolls 30 are brought into contact with the carcass ply 10 on the rotating molding drum 20 are, in effect, negligible.

In the above-described configuration, the carcass ply 10 rotates in the direction indicated by the arrow Y₁ together with the molding drum 20, and the stitching rolls 30, while being urged against the rotating carcass ply 10, are rotated by the above-described rotary driving mechanisms 31 in the direction opposite thereto, that is, in the direction indicated by the arrow Y₂, at substantially the same speed.
Accordingly, the relative speed at the contact point between the carcass ply 10 and the stitching rolls 30 is zero. Thus, just as if the stitching rolls 30 are pressed against the carcass ply 10 in a stationary state, the pressing force F acts normal to the surface of the carcass ply 10, whereby the force component in the circumferential direction becomes substantially zero.
Accordingly, it is possible to exert a sufficient force to perform press-bonding to the carcass ply 10 without taking into consideration the component of force in the circumferential direction as in the conventional case, whereby air between the press-bonding surfaces can be assuredly removed.

Note that, although the above description has been made such that the stitching rolls 30 are continuously moved in the axial direction of the molding drum 20 to perform press-bonding in a spiral manner, the configuration is not limited thereto, and, for example, by using an arbitrary stepping mechanism as a moving mechanism for the stitching rolls 30, a mechanism for stepping the stitching rolls 30 at every rotation of the molding drum 20 may be used.
Furthermore, although the description has been made taking the carcass ply as an example of the unvulcanized rubber member to be attached, it may be an arbitrary unvulcanized rubber member to be attached to the object to be molded.
Next, a case where a tread rubber member (tread composite), which is an unvulcanized rubber member, serving as a tire component, is firmly adhered to the ply, which is an object to be molded, in the same manner will be described.

### Second Embodiment

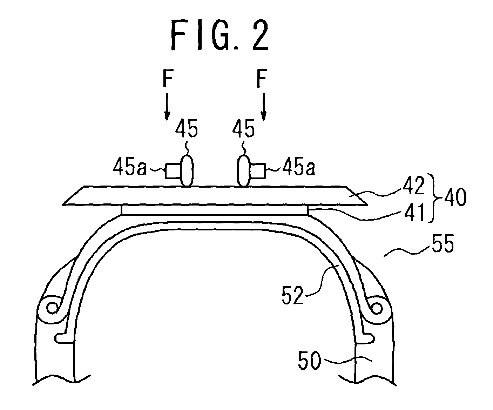

FIG. 2 is a cross-sectional view of a relevant part, showing a toroidal-shaped tire component, for example, the unvulcanized tire 55 after the first molding in the process of manufacturing unvulcanized radial tires (that is, an unvulcanized tire formed by swelling a green case); the tread rubber composite (tire component) 40, which is an unvulcanized rubber member, fitted to the outer circumferential surface of the toroidal-shaped tire component and formed of the belt 41 and the tread rubber member 42; and the stitching rolls 45, which are an embodiment of a pressing roll.

Herein, in order to press-bond the tread rubber composite 40 to the unvulcanized tire 55, which is an object to be molded, using the stitching rolls 45, first, while the unvulcanized tire 55 and the tread rubber composite 40 are disposed on the molding drum 50 shown in FIG. 2, the molding drum 50 is rotated by a known rotary driving mechanism (not shown) formed of, for example, a motor and a speed-reduction mechanism. Thus, the tread rubber composite 40 fitted to the above-described unvulcanized tire is rotated together.

In this state, the stitching rolls 45 are pressed against the middle portion of the tread rubber member 42 of the tread rubber composite 40, at positions radially outer side of the tire. Thus, the above-described tread rubber member 42 is attached to the outer circumferential surface of the unvulcanized tire 55. Then, from there, the above-described stitching rolls 45 are moved toward the shoulder portions of the unvulcanized tire by an appropriate driving mechanism to press and bend the tread rubber member 42 such that it conforms to the shoulder shape of the unvulcanized tire at the shoulder portions. Furthermore, the ends of the tread rubber member 42 are pressed against the side portions of the unvulcanized tire 55.

A known configuration that can freely change the orientation of the stitching rolls 45, disclosed in, for example, the above-described Patent Literature 2 (Japanese Unexamined Patent Application Publication No. 9-117969), may be used as the driving mechanism for the above-described stitching rolls 45.
By attaching the above-described tread rubber member 42 sequentially to the tread portion of the unvulcanized tire 55 (corresponding to a center portion of a tire component of the present invention), the shoulder portions (corresponding to portions between the center portion and ends), and the side portions (corresponding to the ends), air existing between the attached surfaces can be easily removed.

Herein, the stitching rolls 45 according to this embodiment have rotary driving mechanisms 45a, which are formed of, for example, a motor and a speed-reduction unit, for rotating the stitching rolls 45. The rotation of the rotary driving mechanisms 45a is controlled by a control unit (not shown) such that the rotation speed thereof is substantially equal to the outer-peripheral rotation speed of the tread rubber member 42 rotated by the molding drum 50, that is, the rotation of the rotary driving mechanisms 45a is controlled such that the relative speed of the outer circumferential surfaces of the stitching rolls 45 to the outer circumferential surface of the tread rubber member 42 is always substantially zero. The configuration thereof is such that, by using a known motor control method in accordance with the type of motor being used, the difference in relative speed is eliminated, and generation of force parallel to the surface of the tread rubber composite 40, as in the conventional case, is prevented.

### Third Embodiment

Next, stitching rolls according to a third embodiment of the present invention will be described.
An attaching unit according to this embodiment includes stitching rolls having different shapes corresponding to attaching of the tread rubber composite to the tread portion, which is the center portion of the unvulcanized tire, the shoulder portions, and the side portions.

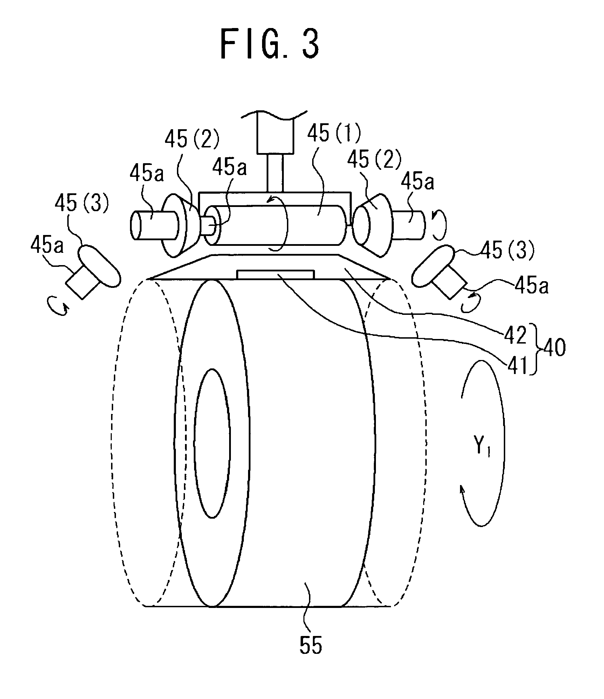

FIG. 3 is a diagram schematically showing these different stitching rolls 45 (1), 45 (2), and 45 (3).
That is, the first stitching roll 45 (1) having a fixed width corresponding to the width of the tread portion (center portion) of the unvulcanized tire 55 and having a constant cylindrical outer shape is provided for the tread portion, the second stitching rolls 45 (2) having side surfaces formed in the shape corresponding to the outer shape of the shoulders in advance are provided for the shoulder portions, and further, the third stitching rolls 45 (3) having a disc-like shape are provided for the side portions.

Herein, in this embodiment, similarly to the stitching rolls 45 according to the first embodiment, the above-described first to third stitching rolls 45 (1) to 45 (3) each have a rotary driving mechanism 45a formed of, for example, a motor and a speed-reduction unit and are controlled such that they are rotated in a direction opposite to the molding drum 50 at an outer-peripheral rotation speed substantially equal to the outer-peripheral rotation speed of the above-described tread rubber member 42.

Ideally, it is desirable that the tread rubber member 42 and the stitching rolls 45, 45 (1), 45 (2), and 45 (3) have completely the same outer-peripheral rotation speeds. However, in actuality, because the operation conditions, such as the rotational resistances, of their rotary mechanisms are different, it is difficult to make them completely the same. Therefore, herein, they are controlled at substantially the same speeds. Herein, the phrase "substantially the same speeds" does not require that they are exactly the same, but means that the outer-peripheral rotation speed of the above-described respective stitching rolls is brought closer to the outer-peripheral rotation speed of the tread rubber member 42 (unvulcanized rubber member). The following case falls under this: That is, the levels of elongation deformation of the tread rubber member 42 in the circumferential direction, separation of the attached members, entrance of air, etc., when the tread rubber member 42 on the rotating molding drum 50 is pressed with the stitching rolls 45, or respective stitching rolls 45 (1), 45 (2), and 45 (3), are, in effect, negligible.

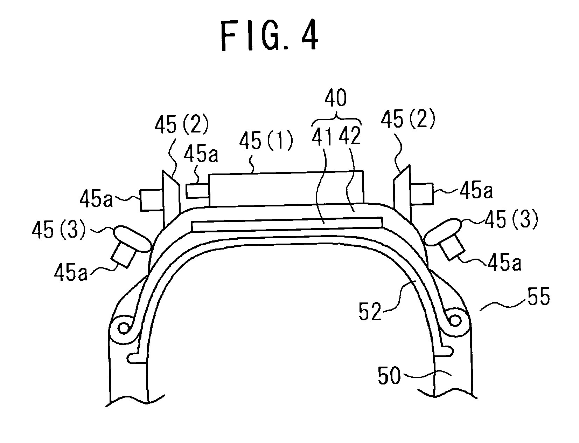

FIG. 4 is a diagram describing the process of performing stitching using the stitching rolls 45 (1), 45 (2), and 45 (3) according to the third embodiment.
As shown in FIG. 2, the tread rubber composite 40 formed of the belt 41 and the tread rubber member 42 is fitted to the outer circumference of the unvulcanized tire 55 that is swelled by a bladder 52 in the second molding.
The tread rubber composite 40 rotates together with the molding drum 50, and the stitching roll 45 (1) presses the tread rubber member 42 of the tread rubber composite 40 by exerting force on it. Thus, the tread rubber composite 40 is press-bonded to the outer circumferential surface of the unvulcanized tire.

In the above-described press-bonding processing, first, the molding drum 50 is rotated by a driving mechanism (not shown), and the first stitching roll 45 (1) is rotated such that the outer circumferential speed thereof is substantially equal to the outer circumferential speed of the tread rubber member. In this state, the tread rubber member 42 is brought into contact with the tread portion of the unvulcanized tire at right angles and is pressed with a predetermined force.
The first stitching roll 45 (1) is kept in the same state after it press-bonds the tread rubber member 42 to the tread portion of the unvulcanized tire. Next, the stitching rolls 45 (2) are rotated such that the outer circumferential speed thereof is substantially equal to the outer circumferential speed of the tread rubber member 42, and, similarly to the stitching roll 45 (1), the stitching rolls 45 (2) are brought into contact with the tread rubber member 42 at right angles to press and deform it with a predetermined force. Herein, as shown, the second stitching rolls 45 (2) are configured as tapered rollers conforming to the shape of the shoulder portions of the unvulcanized tire. Thus, by pressing these stitching rolls 45 (2) against the tread rubber composite 40, the tread rubber member 42 can be press-bonded to the shoulder portions of the unvulcanized tire.

After press-bonding the tread rubber member 42 of the tread rubber composite 40 to the shoulder portions of the unvulcanized tire 55, the second stitching rolls 45 (2) return to the original positions. In turn, the third stitching rolls 45 (3) are rotated such that the outer circumferential speed thereof is substantially equal to the outer circumferential speed of the tread rubber member 42, and, similarly to the stitching rolls 45 (1) and 45 (2), the third stitching rolls 45 (3) are brought into contact with the tread rubber member 42 at right angles to press it with a predetermined force, thereby press-bonding it to the side portions of the unvulcanized tire 55.

Furthermore, although the third stitching rolls 45 (3) may simply press the tread rubber member 42 at right angles, depending on the necessity, it may be gradually moved from the shoulder portions to the ends of the tread rubber composite 40 by an arbitrary moving mechanism, while being in contact with the outer circumference of the rotating tire component at right angles, thereby press-bonding the tread rubber member 42 to the unvulcanized tire.
Note that, during that time, the first stitching roll 45 (1) keeps pressing the tread rubber composite 42 of the tread rubber composite 40 so that the orientation of the unvulcanized tire 55 is maintained in a stable state.

In this embodiment, three types of stitching rolls are used in accordance with the positions of the tire component. This simplifies the position control of the stitching rolls. That is, by making the stitching roll 45 (1) and the stitching rolls 45 (2) press the tread portion and shoulder portions of the tread rubber member 42 at fixed positions and by making the stitching rolls 45 (3) stay at fixed positions or move slightly in straight lines, depending on the necessity, it is possible to attach the tread rubber composite 40 to the unvulcanized tire 55 without causing elongation of the tread rubber member 42 in the circumferential direction.

In this embodiment, as has been described above, the outer circumferences of the tread rubber member 42 and the first to third stitching rolls 45 (1), 45 (2), and 45 (3), i.e., the contact portions, rotate in the opposite directions from each other at substantially the same speed. Thus, just as if the stitching rolls 45 (1), 45 (2), and 45 (3) are pressed against the tread rubber member 42 in a stationary state, no component of force in the circumferential direction is generated.
Furthermore, when the stitching rolls are pressed against the tread rubber member, no component of force in the circumferential direction is generated in the tread rubber member, unlike in the conventional case. Thus, it is possible to suppress unwanted deformation of the rubber member in the circumferential direction and to exert a force sufficient to remove the air remaining between the unvulcanized tire and the tread rubber member to the stitching rolls.

In addition, because the press-bonding is performed first on the tread portion, then on the shoulder portions, and then on the side portions, in other words, the position of the press-bonding is changed from the center of the tread rubber member toward the ends, air between the press-bonding portions can be assuredly removed. Furthermore, when the press-bonding is performed on the shoulder portions and side portions, the first stitching roll 45 (1) at the tread portion keeps performing press-bonding on the unvulcanized tire 55. Accordingly, the press-bonding step can be performed stably because the tread rubber member, which has the largest area, is securely held.
Note that, in this embodiment, the description has been made such that the first to third stitching rolls 45 (1) to 45 (3) are rotated such that the outer circumferential speed thereof is substantially equal to the outer circumferential speed of the tread rubber member 42. However, it is also possible that the first to third stitching rolls 45 (1) to 45 (3) are rotated such that the outer circumferential speed of any one of them is substantially equal to the outer circumferential speed of the tread rubber member 42, or, for example, it is also possible that the second and third stitching rolls 45 (2) and 45 (3) are rotated such that the outer circumferential speed thereof is substantially equal to the outer circumferential speed of the tread rubber member 42.

Product tires are manufactured by vulcanizing the thus-molded unvulcanized tires. Because the tread rubber member 42 is not displaced (elongated) in the circumferential direction during attaching with the above-described method for manufacturing, unwanted deformation of the rubber member is suppressed. Furthermore, there is no need to determine the size of the tread rubber member 42 in advance taking the elongation into account, unlike in the conventional case, and problems such as partial wear and degradation in uniformity, occurring in the conventional case, do not occur.

Although the above description of the embodiment has been made such that the tire component is an unvulcanized tire formed by swelling a green case, it is not limited thereto, and it may be, for example, un unvulcanized tire component (object to be molded) formed on a support made of a rigid core or the like, i.e., a green case having a toroidal shape. Furthermore, also regarding the use when a molding drum is used in the swelling, the present invention is not limited to the embodiments, but may be applicable to various specifications.

### Example of First Embodiment

As shown in FIG. 5B, the inner liner 14 was attached to the molding drum 20, and a ply having cords arranged parallel to the axial direction of the molding drum was wound thereon. Then, press-bonding was performed with the conventional stitching rolls and the stitching rolls of the present invention, and the results were compared. Note that the experiments were performed under the same conditions, except for the presence/absence of the driving mechanism of the stitching rolls.
As a result, whereas the carcass ply was inclined by about 1.3° with respect to the axis of the molding drum with the conventional stitching rolls, the carcass ply was inclined by 0°, that is, no inclination was observed, with the stitching rolls of the present invention.
Thus, the advantage of the present invention was confirmed.

### Reference Signs List

10 carcass ply, 14 inner liner, 20 molding drum, 22 rotation axis of molding drum, 30 stitching rolls, 31 rotary driving mechanism (for stitching rolls), 32 piston mechanism, 32a piston, 32b cylinder, 34 supporting base having nut member, 35 screw rod, 36 screw-rod driving mechanism, 40 tread rubber composite, 41 belt, 42 tread rubber member, 45, 45 (1), 45 (2), 45 (3) stitching rolls, 45a rotary driving mechanism, 50 molding drum, 52 bladder, 55 unvulcanized tire.

## Claims

1. A method for manufacturing unvulcanized tires by attaching an unvulcanized rubber member to an object to be molded, the method comprising:
a step of disposing the unvulcanized rubber member on the object to be molded;
a step of rotating the object to be molded; and
a step of press-bonding the unvulcanized rubber member to the object to be molded while rotating a pressing roll in a direction opposite to a direction in which the unvulcanized rubber member is rotated such that the outer circumferential speed of the pressing roll is substantially equal to the outer circumferential speed of the unvulcanized rubber member.

2. The method for manufacturing unvulcanized tires according to claim 1, further comprising a step of moving the pressing roll in a direction of a rotation axis of the object to be molded.

3. The method for manufacturing unvulcanized tires according to claim 1 or 2,
wherein, in a step of pressing the unvulcanized rubber member, the pressing roll is pressed in the radial direction of the object to be molded.

4. The method for manufacturing unvulcanized tires according to claim 1,
wherein the object to be molded is a toroidal-shaped tire component.

5. The method for manufacturing unvulcanized tires according to claim 4,
wherein the press-bonding step includes a first press-bonding step in which the unvulcanized rubber member is press-bonded to a center portion of the tire component; a second press-bonding step in which the unvulcanized rubber member is press-bonded to middle portions of the tire component between the center portion and ends; and a third press-bonding step in which the unvulcanized rubber member is press-bonded to the ends of the tire component.

6. The method for manufacturing unvulcanized tires according to claim 5,
wherein the first press-bonding step, the second press-bonding step, and the third press-bonding step are performed in sequence in the press-bonding step, and, at this time, the first press-bonding step is continued while the second press-bonding step and the third press-bonding step are performed.

7. An apparatus for manufacturing unvulcanized tires by attaching an unvulcanized rubber member to an object to be molded, the apparatus comprising:
a driving mechanism for rotating the object to be molded;
a pressing roll for press-bonding the unvulcanized rubber member disposed on the object to be molded to the object to be molded; and
a pressing-roll driving mechanism for rotating the pressing roll in a direction opposite to a direction in which the unvulcanized rubber member is rotated such that the outer circumferential speed of the pressing roll is substantially equal to the outer circumferential speed of the unvulcanized rubber member.

8. The apparatus for manufacturing unvulcanized tires according to claim 7, further comprising a moving mechanism for moving the pressing roll in a direction of a rotation axis of the object to be molded.

9. The apparatus for manufacturing unvulcanized tires according to claim 7 or 8, further comprising a pressing mechanism for pressing the pressing roll in the radial direction of the object to be molded.

10. The apparatus for manufacturing unvulcanized tires according to claim 7,
wherein the object to be molded is a toroidal-shaped tire component.

11. The apparatus for manufacturing unvulcanized tires according to claim 10,
wherein the pressing roll is a first pressing roll that press-bonds the unvulcanized rubber member to a center portion of the tire component.

12. The apparatus for manufacturing unvulcanized tires according to claim 10,
wherein the pressing roll is a second pressing roll that press-bonds the unvulcanized rubber member to middle portions of the tire component between the center portion and ends.

13. The apparatus for manufacturing unvulcanized tires according to claim 10,
wherein the pressing roll is a third pressing roll that press-bonds the unvulcanized rubber member to the ends of the tire component.

14. The apparatus for manufacturing unvulcanized tires according to claim 11,
wherein the first pressing roll has a cylindrical shape with a constant diameter.

15. The apparatus for manufacturing unvulcanized tires according to claim 14,
wherein the first pressing roll has a width that is substantially equal to the width of the center portion of the tire component.

16. The apparatus for manufacturing unvulcanized tires according to claim 12,
wherein the second pressing roll has a circular truncated cone shape with an inclination substantially equal to the inclination of shoulder portions of the tire component.
